(19) Europäisches Patentamt
European Patent Office
Office européen des brevets

(11) **EP 0 926 525 B1**

(12) **EUROPÄISCHE PATENTSCHRIFT**

(45) Veröffentlichungstag und Bekanntmachung des Hinweises auf die Patenterteilung:
**05.01.2005 Patentblatt 2005/01**

(51) Int Cl.$^7$: **G02B 21/26**

(21) Anmeldenummer: **98121625.2**

(22) Anmeldetag: **12.11.1998**

(54) **Positioniertisch**

Positioning table

Table de positionnement

(84) Benannte Vertragsstaaten:
**DE FR GB IE IT NL**

(30) Priorität: **23.12.1997 DE 19757529**

(43) Veröffentlichungstag der Anmeldung:
**30.06.1999 Patentblatt 1999/26**

(73) Patentinhaber: **Carl Zeiss SMT AG**
**73447 Oberkochen (DE)**

(72) Erfinder:
• **Trunz, Michael**
**73479 Ellwangen (DE)**

• **Trier,Bernhard**
**73430 Aalen (DE)**

(74) Vertreter:
**Müller-Rissmann, Werner Albrecht, Dr. et al**
**Carl Zeiss,**
**Patentabteilung**
**73446 Oberkochen (DE)**

(56) Entgegenhaltungen:
| | |
|---|---|
| DE-A- 19 601 018 | DE-A- 19 650 392 |
| US-A- 5 021 282 | US-A- 5 061 541 |
| US-A- 5 262 220 | US-A- 5 626 157 |

**Beschreibung**

Die Erfindung betrifft einen Positioniertisch mit zumindest einem Tragekörper aus zumindest einem ersten Material, der eine Vielzahl von Ausnehmungen besitzt.

Bei gewissen Anwendungen (insbesondere bei der Herstellung von größeren Körpern aus mehreren Einzelkörpern, welche insbesondere aus Silikat oder Keramik bestehen) darf ein Positioniertisch nach der Herstellung (vorzugsweise an verspiegelten Flächen, an Meßflächen oder an Auflageflächen für andere Bauteile) nur minimale Deformationen aufweisen, wobei der erlaubte Deformationsbereich dabei im Nanometerbereich liegt.

Dabei ist nicht nur die Größe und das Gewicht des Positioniertisches, sondern insbesondere auch seine Form und sein Schwingungsverhalten relevant (insbesondere inneren Kanten). Die Verwendung dieser Positioniertische erfolgt bevorzugt in Bereichen, in denen Nanometerdifferenzen relevante Größen sind (z.B. Mikroskopie, Astronomie, usw.).

Aus dem Stand der Technik der Feinfügetechnik sind im wesentlichen zwei Methoden bekannt, um zwei Körper fest und biegesteif miteinander zu verbinden:

a) Beim Ansprengen werden optische Oberflächen durch die van der Waalsschen Kräfte miteinander verbunden. Dabei wird das Ansprengen hauptsächlich für kraftschlüssige, vorübergehende Verbindungen in der Fertigung verwendet.

Nachteilig bei diesem Verfahren ist, daß sich zwei durch Ansprengung verbundene Teile leicht durch entsprechende, die Verbindungskanten benetzende Flüssigkeiten lösen lassen. Auch ist die Ansprengung nicht unbedingt erschütterungsfest.

In der Produktion wird das Ansprengen als dauerhafte Verbindung für kleine optische Elemente mit mm-Abmessungen verwendet. Große Elemente mit cm-Abmessungen können so nicht, mit der für eine dauerhafte Verbindung nötigen Sicherheit verbunden werden.

Zur Verbesserung und Sicherung der Ansprengung kann mittels Sicherungslack und/oder Kittraupe außerhalb der Ansprengflächen die Beständigkeit der Verbindung vergrößert, jedoch nicht perfektioniert werden.

b) Beim spannungsarmen Kleben werden die Klebestellen üblicherweise durch geschickte Gestaltung der Klebestellen (Optimierung des Klebespaltes und der Klebepads) optimiert. Bei dieser Optimierung werden grundlegende Vorgaben (Klebespalt im Bereich zwischen 1/10 und 3/10 mm, Pads kleiner/gleich 6x6 mm) gemäß dem Stand der Technik berücksichtigt.

Geklebte Teile haben den großen Nachteil, daß nicht unbedingt eine kraft- und formschlüssige Verbindung möglich ist. Das unvermeidbare Kriechen der Verbindung, und die damit verbundene Dejustierung der Teile zueinander, erzeugt ebenfalls in manchen Anwendungen entsprechende Probleme.

Aus der DE 37 11 466 ist eine Vorrichtung zur Verbindung von mindestens zwei Körpern bekannt, bei welcher mittels eines Zugankers miteinander verbunden werden, ohne daß thermische Zwangskräfte auftreten. Diese Vorrichtung hat den Nachteil, daß die beiden Körper nach der Verbindung nachgearbeitet werden müssen, da der Zuganker an den Verbindungsflächen starke Kräfte erzeugt. Dafür ist die Verbindung sehr stabil.

Aus der DE 39 34 546 ist ein Vorrichtung zur klebenden Verbindung zweier Körper mittels eines Zwischenstücke bekannt, wobei aber die Zwischenstücke bis an die Oberflächen der beiden Körper geführt sind und die Oberfläche in ihrem Bereich nicht genutzt werden kann.

Weitere Fügetechniken wie Schweißen, Löten, usw. sind nur unter großem Vorbehalt als Feinfügetechniken geeignet.

Es ist die Aufgabe der Erfindung, einen gewichtsreduzierten Positioniertisch zu entwickeln, der bei hoher Biegesteifigkeit eine Einstellung seines Schwingungsverhaltens ermöglicht.

Diese Aufgabe wird durch den kennzeichnenden Teil des ersten Patentanspruchs gelöst.

Eine Kombination der beiden Anforderungen Biegesteifigkeit und einstellbares Schwingungverhalten ist ungewöhnlich, da man im Normalfall entweder das eine oder das andere wünscht. Nach dem Stand der Technik bekannte Verbindungstechniken (insbesondere Feinfügetechniken) können dieses Problem nicht lösen, welches nur auftritt, wenn man Unterschiede im Nanometerbereich berücksichtigen muß.

Mit der Erfindung ist es möglich, einen Positioniertisch mit großen Abmessungen, d.h. größer als 10 cm so herzustellen, daß sowohl seine Biegesteifigkeit als auch sein Schwingungsverhalten angepaßt werden kann (Es fanden Versuche statt, bei welchen die zu verbindenden Flächen eine Längenausdehnung von mehr als 40 cm hatten.).

Auf Grund der geringen Deformationen des Positioniertisches insbesondere bei Verklebung eignet er sich insbesondere zum Einsatz in optischen Geräten, welche mit kleinen Wellenlängen arbeiten. Dabei sei unter einem Positioniertisch ein beweglicher Tisch gemeint, welcher Bewegungen auf der X-und/oder der Y-Achse und manchmal auch auf der Z-Achse ausführen kann. Derartige Positioniertische werden insbesondere in UV-Mikroskopen bzw. in Geräten benötigt, deren Hauptwellenlänge im UV-Bereich unterhalb von 400 nm liegt.

Die Erfindung wird im folgenden anhand eines Ausführungsbeispiels unter Bezugnahme auf die beiliegenden Figuren, näher erläutert, wobei das nachfolgende Beispiel keinen abschließenden Charakter für die Erfindung hat und weitere vorteilhafte Ausgestaltungen der Erfindung beinhaltet.

Es sind zu sehen in

Figur 1      eine seitliche Ansicht eines Positioniertisches gemäß der Erfindung;

Figur 2      eine Ansicht von unten auf den Positioniertisch gemäß Figur 1;

Figur 3      eine Detailansicht einer Klebestelle an dem Positioniertisch aus den Figuren 1 und 2;

Figur 4      eine Aufsicht auf die Klebstelle;

Figur 5      einen seitlichen Schnitt durch die Klebstelle;

Figur 6      eine Aufsicht auf eine Variation der in Figur 4 dargestellten Klebefläche;

Figur 7      eine Frontalansicht des Ausgasungskanals aus Figur 6;

Figur 8      eine erste Ausgestaltung der erfindungsgemäßen Klebestelle mit Ausgleichselement;

Figur 9      eine Modifikation der ersten Ausgestaltung der erfindungsgemäßen Klebestelle; und

Figur 10      eine zweite Ausgestaltung der erfindungsgemäßen Klebestelle mit Ausgleichselement.

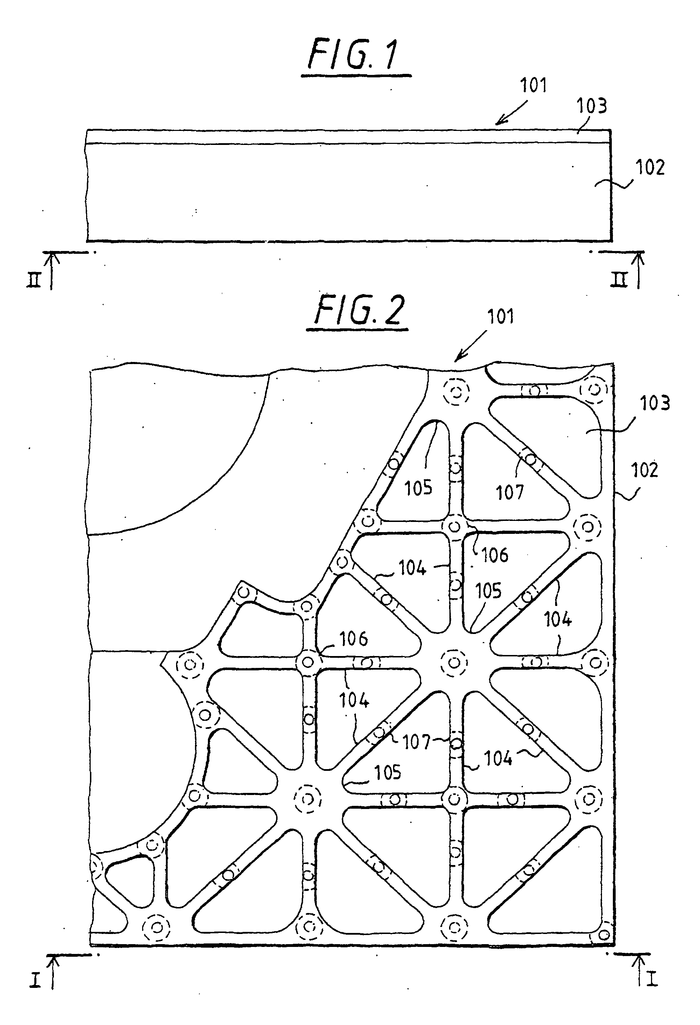

Der in den Figuren 1 und 2 dargestellte Positioniertisch (101) besteht im wesentlichen aus einem Tragekörper (102) mit einer auf ihm befestigten Deckplatte (3). Beide Körper (101, 102) sind aus ein und demselben Material und bestehen aus demselben Material (wobei als Materialien insbesondere Silikate, Keramiken (z.B. Zerodur) und spezielle Metalle (z.B. Invar) mit niedrigem thermischen Ausdehnungskoeffizienten geeignet sind).

Der Tragekörper (102) besitzt eine Leichtbaustruktur, damit der Tisch (101) eine möglichst große Dynamik besitzt und besonders starken positiven und negativen Beschleunigungskräften ausgesetzt werden kann. Um trotz der Leichtbauweise eine hohe Steifigkeit des Positioniertisches (101) insbesondere in der X- und Y-Achse und quer zu diesen zu erhalten, sind die Stege (104) zwischen den Knoten (105) und den Stützpunkten (106) in diesen Vorzugsrichtungen orientiert.

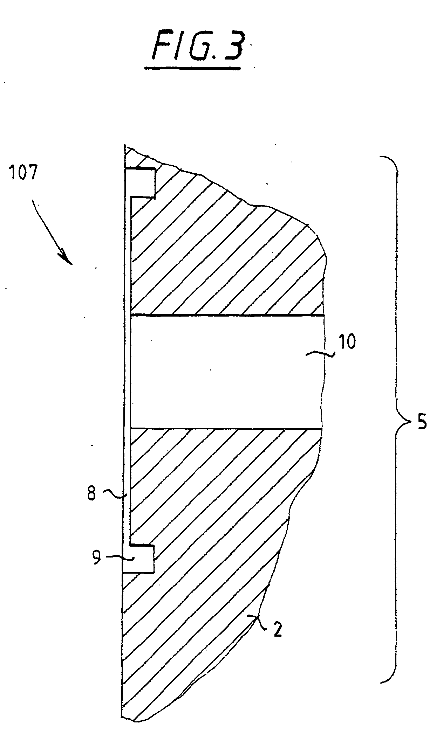

Auf den Stegen (104), Knoten (105) und Stützpunkten (106) sind Klebestellen (107) vorbereitet, an welchen die Deckplatte (103) auf dem Tragekörper (102) durch Klebungen befestigt wird. Die konkrete Formgebung dieser Klebestellen (107) ist in der Figur 3 nochmals erläutert.

Durch die Verteilung der Klebestellen (107) zwischen dem Tragekörper (102) und der Deckplatte (103) kann gezielt die Biegesteifigkeit des Positioniertisches (101) so verändert werden, daß er bei Beschleunigungen sich vorhersehbar deformiert. Dabei muß aber eine möglichst hohe Biegesteifigkeit erhalten bleiben.

Wenngleich diese Deformationen im Nanometerbereich liegen, sind diese Deformationen für optische Instrumente, welche mit kleinen Wellenlängen von insbesondere kleiner als 200 nm arbeiten so gravierend, daß sie insbesondere bei einer Automatisierung des Instrumentes (z.B. bei der Automatisierung einer Inspektion) vorab bekannt sein müssen, um eine Einleitung von gezielten Gegenmaßnahmen zu ermöglichen. Dabei dürfen die Deformationen aber auch nicht so groß sein, daß diese Gegenmaßnahmen mehr als eine sehr kleine Feinkorrektur ausmachen dürfen.

Durch die Dimensionierung der einzelnen Teile des Positioniertisches (101), insbesondere der Stegen (104), Knoten (105) und Stützpunkten (106) der Leichtbaustruktur, erfolgt eine Grobanpassung des Deformations- bzw. Schwingungsverhaltens des Positioniertisches (101).

Durch die Verklebung der offenen Leichtbaustruktur des Tragekörpers (103) mit der Deckplatte (102) erhält dieser seine hohe Biegesteifigkeit.

Durch die Verteilung der Klebestellen (107) auf der Struktur der Leichtbaustruktur, deren Dimensionierung (d.h. insbesondere Größe des Klebekreisdurchmessers) sowie der Anbringung von Ausgleichskörpern (108) erfolgt dann eine Feinanpassung des Deformations- bzw. Schwingungsverhaltens des Positioniertisches (101) auf die von einer Ausgleichselektronik (in der Figur nicht dargestellt) vorgegebenen Korrekturwerte.

Diese Korrekturwerte können nicht in Tabellen abgelegt werden oder gar errechnet werden, will man eine Korrektur in Echtzeit erreichen. Sie sind durch die Ausgleichselektronik vorgegeben und der Positioniertisches (101) muß in seinem Deformations- bzw. Schwingungsverhalten darauf angepaßt werden.

Während einige der Klebestellen (107) von außen zugänglich sind (insbesondere auf den Stegen (104) und an den Stützpunkten (106) der Leichtbaustruktur), liegen die Klebestellen (107) auf den Knoten (105) vollständig im Inneren der Knotenoberflächen.

Der Kleber wird durch kreisrunde Bohrungen (deren Durchmesser vorzugsweise ca. 1 bis 2 mm beträgt) genau im Zentrum der kreisrunden Klebestellen (107) diesen zugeführt und fließt in den sehr engen Klebespalt (mit einem Durchmesser von vorzugsweise ca. 6 mm) der Klebestelle (107) durch die Kapillarwirkung. Durch einen Freistich um den Klebespalt wird der Kleber daran gehindert, den Klebespalt der Klebestelle (107) zu verlassen.

Bei der Verklebung muß ein Lufteinschluß an der Klebestelle (107) verhindert werden. Bei den Klebestellen (107), deren Freistich nicht in einen der Zwischenräume der Leichtbaustruktur endet, muß dazu ein Druckausgleichskanal von einem der Zwischenräume bis an den Freistich herangeführt werden.

In der Figur 3 ist nun eine der inneren Klebestellen (5; 107 aus Figur 2) auf einem Knoten (105) im Detail dargestellt. Die entsprechenden Klebestellen (107) auf den Stegen (104) und an den Stützpunkten (106) der Leichtbaustruktur sind entsprechend gestaltet, wobei bei ihnen der Druckausgleichskanal von einem der Zwischenräume bis an den Freistich im Normalfall entfallen kann.

Eine Klebestelle (5) besteht aus einer planen Fläche (4) mit einer Gegenfläche (3), in welche alle zur Klebung benötigten Aussparungen eingearbeitet sind.

Diese Aussparungen sind insbesondere ein flacher kreisförmiger Klebepad (7) mit einem definierten Klebespalt (8), welche von einem größeren kreisringförmigen Freischnitt (9) zur Begrenzung des Klebespaltes (8) umgeben ist. Durch diesen Freischnitt (9) kann der Kleber, welcher sich in dem Klebespalt (8) durch Kapillarkräfte ausbreitet, auf den Bereich dieses Klebespaltes (8) begrenzt werden. In dem Klebepad (7), vorzugsweise in ihrem Mittelpunkt, endet ein kreiszylinderförmiger Kanal (10) zur Einbringung des Klebers unter Überdruck (vorzugsweise im Bereich zwischen 1 und 5 Bar, insbesondere im Bereich zwischen 3 und 4 Bar). An den Freischnitt (9) schließt sich ein rechteckförmiger Kanal (11) zur Entgasung der bei der Aushärtung des Klebers entstehenden Gase an.

Dieser Klebereinbringungskanal (10) sollte so kurz wie möglich sein, damit der benötigte Überdruck bei der Einbringung des Klebers nicht zu hoch sein muß. Außerdem kann durch anlegen eines Unterdrucks am Kanal (11) der benötigte Überdruck am anderen Kanal (10) reduziert werden.

Hat man einen 0,1 mm dicken Klebespalt (8) von 6 mm Durchmesser, so sollte der Freischnitt (9) einen um 2 mm größeren Durchmesser besitzen und möglichst dicker als 0,5 mm sein. Das Volumenverhältnis von Klebestelle (5) zu Freischnitt (9) beträgt dann rund 1:4, wobei ein Wert von 1:3 nicht unterschritten werden sollte.

Der Freischnitt (9) wird in diesem Beispiel zu rund 69 % von der Verbindungsfläche (3, 4) umschlossen, da der Entgasungskanal (11) in den Freischnitt (9) endet. Der Entgasungskanal (11) selber ist wieder bis zu seinem Austritt aus den beiden Körpern (1, 2) beidseitig von den Verbindungsfläche (3, 4) umschlossen.

Der rechteckförmiger Kanal (11) zur Entgasung der bei der Aushärtung des Klebers entstehenden Gase sollte die doppelte Breite des Freischnitts (9) haben und genauso hoch sein. Bei seiner Dimensionierung muß aber auch seine Länge berücksichtigt werde, um eine gute Entgasung sicherzustellen. Er kann kleiner gewählt werden, wenn die Klebestelle (5) nahe am Rand der beiden zu verbindenden Körper (1, 2) angeordnet ist und muß größer gewählt werden, wenn sich die Klebestelle (5) weiter im Inneren der beiden Körper (1, 2) befindet.

Der kreiszylinderförmiger Kanal (10) zur Einbringung des Klebers hat in dem hier dargestellten Beispiel einen Radius von einem Viertel des Radius des Klebepads (7) (wobei seine Dimensionierung auch in Abhängigkeit von der Viskosität des verwendeten Klebers zu wählen ist) und sollte möglichst kurz sein.

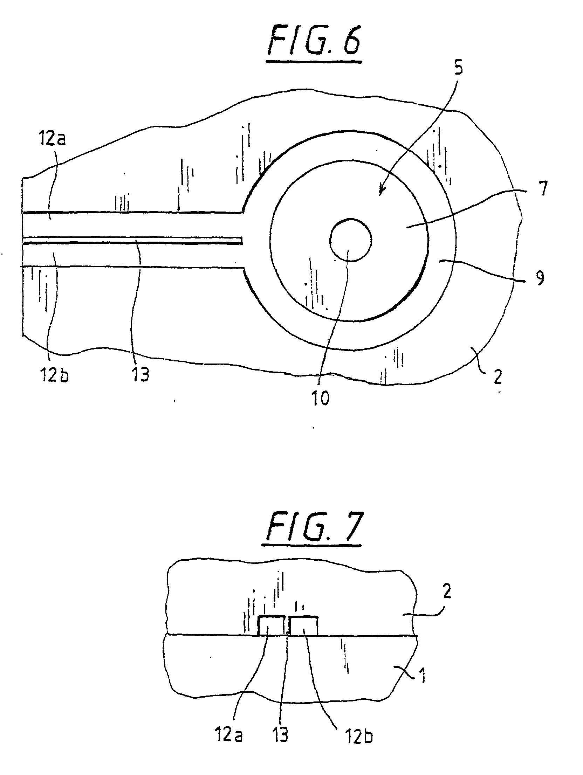

Um den rechteckförmigen Kanal (11) zur Entgasung der bei der Aushärtung des Klebers nicht zu groß werden zu lassen, wenn die Klebestelle (5) sehr weit im Inneren der beiden zu verbindenden Körper (1, 2) befindet, kann man den Kanal modifizieren, wie dies in den Figuren 6 und 7 dargestellt ist.

Indem man in der Mitte des Kanals (11') eine Trennwand (13) einfügt, erzeugt man zwei Kanäle (12a, 12b), welche in den Freischnitt (9) enden. In den einen Kanal (12a) kann man dann ein Gas (z.B. Luft) einblasen, welches durch den anderen Kanal (12b) entweichen kann. Somit erzeugt man eine gerichtete Gasströmung um den Klebepad (7) im Freischnitt (9), wodurch die Größe des Entgasungskanals (11') auch bei sehr großer Länge in vertretbaren Grenzen gehalten werden kann.

Zur Erhöhung der Klebefestigkeit kann eine oder alle beide sich gegenüberliegenden Flächen des Klebepads (7) leicht angerauht sein. Ob dies sinnvoll ist, hängt auch von der Viskosität des verwendeten Klebers und der Klebespaltdicke bzw. -breite ab, da der Kleber ja den ganzen Klebepad (7) bis zum Freischnitt (9) ausfüllen soll.

Verwendet man einen UV-härtenden Kleber, so kann es sinnvoll sein, die Wände des Entgasungskanals (11, 11') und des Freischnitts (9) zumindest teilweise zu verspiegeln, um durch den Entgasungskanal (11, 11') zusätzlich UV-Licht an den Klebepad (7) zu bringen.

Theoretisch ist es möglich, auf den Kanal (10) zur Einbringung des Klebers zu verzichten, wenn man einen Kleber nimmt, welcher nach der Einbringung erst durch äußere Einwirkung (z.B. Erwärmung, Einstrahlung von UV-Licht, usw.) eine Aushärtung, gegebenenfalls unter Volumenvergrößerung des Klebers, erfährt. Der richtige Klebeprozeß wird dann zeitverzögert ausgelöst. Dabei ist aber die Mengendosierung des Klebers sehr kritisch.

Wenn bei diesem Prozeß keine Ausgasung des Klebers erfolgt, kann man auch auf den Kanal (11, 11') zur Entgasung der Klebestelle (5) verzichten. Tritt keine Volumenänderung bei der Aushärtung des Klebers ein, so könnte theoretisch auch auf den umlaufenden Freischnitt (9) verzichtet werden.

Wenn die beiden zu verbindenden Körper (1, 2) nicht aus demselben Material bestehen, so ist bei der Materialauswahl insbesondere deren thermischer Ausdehnungskoeffizient zu berücksichtigen. Als Materialien zur Ausführung der Erfindung kommen wie bereits erwähnt insbesondere Keramik- oder Glasmaterialien in Frage.

Für die Festigkeit der Verbindung zwischen den beiden Körpern (1, 2) ist insbesondere die Plazierung des Klebepads (7) innerhalb der Verbindungsfläche (3, 4) wichtig. Besonders vorteilhaft ist auch der flache Entgasungskanal (11, 11') (welcher eine gute Entgasung sicherstellt) sowie der runde Kanal (10) zum Einbringen des Klebers (welcher der Einbringung des Klebers einen kleinstmöglichen Widerstand entgegenbringt).

Das runde Klebepad (7) mit einer Kanalöffnung in seiner Mitte sorgt für einen sauberen Fluß des Klebers sowie für eine spannungsarme Klebestelle. Zur Minimierung der Verformungen der zu verbindenden Körper sind die Klebestellen vorzugsweise in Höhe des Schubmittelpunktes zu plazieren.

Die Ausnehmungen zur Durchführung der Verklebung sind in dem obigen Beispiel nur auf einer der Kontaktflächen eingearbeitet, da dies fertigungstechnisch einfacher ist. Selbstverständlich könnte ein Teil der Ausnehmungen auch auf der gegenüberliegenden Kontaktfläche eingearbeitet sein, wodurch sich aber Justierprobleme ergeben würden.

Der Übergang zwischen dem zweiten Körper (2) und dem ersten Körper (1) (d.h. die innere Kante) muß exakt rechtwinklig sein, da die erste vertikale freistehende Wand des zweiten Körpers (2) verspiegelt ist und zur Positionsvermessung des zusammengefügten Körpers 81, 2) dient.

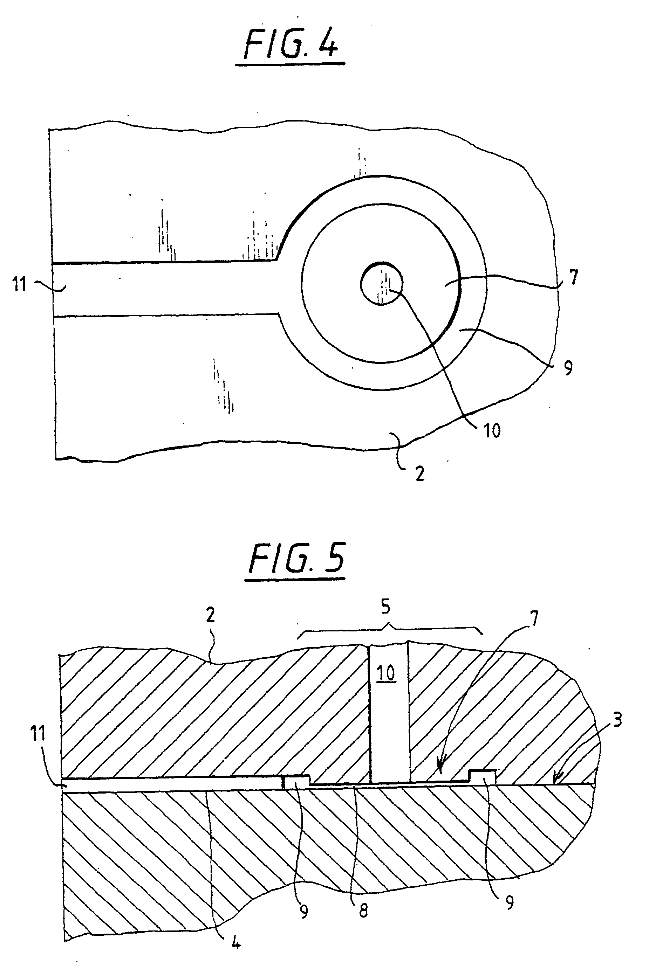

Nun ist es aber fertigungstechnisch unmöglich einen exakten inneren rechten Winkel an einem homogenen Körper herzustellen. Deshalb besteht der herzustellende Körper aus zwei einzelnen Körpern (1, 2), welche zu einem einzigen Teil zusammengefügt werden. Auf den Fügeflächen (Verbindungsflächen) (3, 4) befinden sich die insbesondere in den Figuren 3 bis 5 beschriebenen Klebestellen (dort mit 5 gekennzeichnet). Der so entstandene Körper (1, 2) zeichnet sich durch eine sehr hohe Formgenauigkeit bei gleichzeitiger hoher Belastbarkeit gegenüber Schüben aus.

Bei dem vorab beschriebenen Körper (1,2) handelt es sich um die Auflageplatte (1) für einen X-Y-Z-Positioniertisch, welcher in Mikroskopen eingesetzt wird, welche Strahlungen im UV-Bereich zur Kontrolle der zu begutachtenden Teile einsetzen. Derartige Positioniertische mit ihren Auflageplatten (1) müssen im höchsten Maße formstabil sein und gleichzeitig eine hohe Festigkeit besitzen, welche schnelle Bewegungen des Tisches insbesondere bei einer Automatisierung der Kontrollaufgaben erlaubt.

Durch entsprechende Auswahl des Klebers mit einer möglichst geringen Schrumpfung (kleiner 10 %, besser kleiner 3 % und noch besser kleiner 1 % bzw. kleiner 0,6 %) kann man die gewünschte Kräftereduzierung unterstützen. Als Kleber eignen sich alle Kleber, welche eine möglichst geringe Schrumpfung aufweisen und welche eine sichere Verklebung mit dem Material der zu verbindenden Körper ermöglichen. Für die bevorzugten Materialien Silikat und Keramik sind dies insbesondere Epoxi-Kleber mit einer Schrumpfung von kleiner 3 % oder kleiner 0,6 %.

Die Klebestellen in den Verbindungsfläche zwischen den beiden zu verbindenden Körpern stellt nicht nur eine sichere Verbindung der beiden zu verbindenden Körper miteinander dar, insbesondere bei starken Beschleunigungen bzw. deren Änderung, sondern ermöglicht auch eine Einstellung des Schwingungsverhaltens des verbundenen Körpers. Ihre Haltekraft muß also insbesondere erst dann voll wirksam werden, wenn sich die zu verbindenden Körper an ihren Verbindungsflächen voneinander lösen wollen. Dies kann je nach der Geometrie des verbundenen Körpers und zur Lage der Verbindungsflächen relativ zu der bzw. den Beschleunigungsrichtungen unterschiedlich schnell erfolgen.

Bei dem in den Figuren 1 bis 7 dargestellten Beispiel kann der Freischnitt auch in dem einen Körper und die Ausnehmung zur Erzeugung des Klebespaltes im gegenüberliegenden Körper ausgebildet werden.

Diese Modifikationen haben aber den Nachteil, daß eine genauere Justierung der beiden zu verbindenden Körper zueinander bei der Verklebung erfolgen muß. In Sonderfällen könnte aber auch diese Lösung vorteilhaft sein.

Selbstverständlich könnte der Kleberzuführungskanal auch durch den anderen der zu verbindenden Körper den Klebespalt heranführen und der Entlüftungskanal im Inneren des Körpers, weit weg von den Verbindungsflächen angeordnet sein.

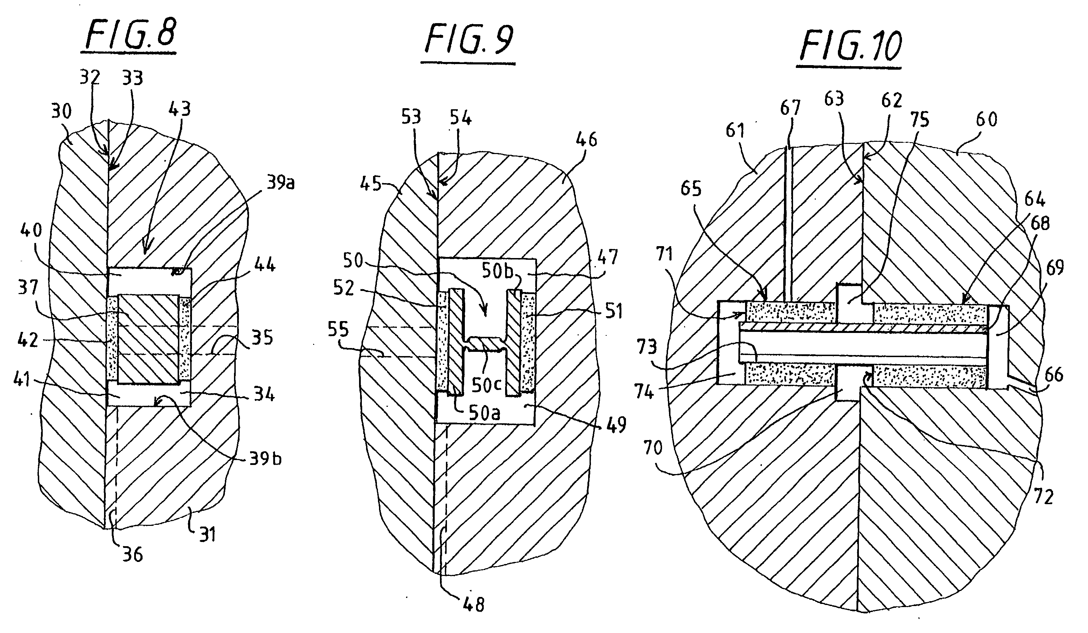

Durch die in den Figuren 8 und 9 dargestellten Klebestellen kann die Krafteinwirkung durch die Klebung und die sich daraus ergebenen Deformationen auf rund ein Zehntel von anderen Verbindungstechniken reduziert werden.

Die nachfolgend beschriebene Verbindung zwischen zwei Körpern (30, 31) verwendet ein spannungsreduzierendes Element (37) (welches auch Ausgleichskörper genannt werden kann), welches zwischen zwei Klebungen eingebracht wird und welches die durch die Schrumpfung des Klebers verursachten Kräfte in Form von Spannungen in sich aufnimmt. Die so erhaltene Klebeverbindung verursacht erheblich weniger Verformungen der feingefügten Körpern (30, 31) als bei den nach dem Stand der Technik bekannten Verbindungstechniken.

Der physikalische Hintergrund für die durch eine Klebung in den gefügten Körpern (30, 31) verursachte Verformung liegt im wesentlichen in der Schrumpfung des Klebers begründet. Die Längenänderung in einer der beiden Klebeverbindungen kann im wesentlichen mit folgender Formel beschrieben werden:

$$\varepsilon = \delta l / l_0$$

mit der Dehnung ε, der Längenänderung δl und der Länge vor der Änderung $l_0$.

$$F/A = E^*\varepsilon$$

mit der Kraft F, der Klebefläche A und dem Elastizitätsmodul E. Daraus ergibt sich

$$F/A = E^*\delta l/l_0 \rightarrow F = E^*A^*\delta l/l_0 \rightarrow F \sim E^*A$$

Wenn nun F, und damit die Kraft auf die Klebestelle (43), möglichst klein sein soll, dann muß A oder E verkleinert werden, da δl durch die Schrumpfung des Klebers vorgegeben und $l_0$ durch den bzw. die beiden Klebespalte (41, 42) (deren Dicke nicht beliebig reduziert werden kann, z.B. durch die Notwendigkeit der Einbringung des Klebers) vorgegeben ist. Die Fläche A kann nicht beliebig verkleinert werden und wird im wesentlichen durch die benötigten Haltekräfte festgelegt. Der Elastizitätsmodul ist durch die zu klebenden Körper (30, 31) festgelegt.

Um nun trotzdem die Kraft verringern zu können, wird ein zusätzlicher Körper (37) zwischen den beiden zu verbindenden Körpern (30, 31) verwendet. Bei diesem Körper (37), welcher zwischen zwei Klebestellen in einen Hohlraum (34) zwischen die zu verklebenden Körper (30, 31) eingebracht wird, läßt sich die Querschnittsfläche und/oder der Elastizitätsmodul frei wählen.

In der Figur 8 ist nun eine konstruktive Lösung unter Verwendung obiger Überlegungen dargestellt.

Die zu verbindenden Körper (30, 31) bestehen vorzugsweise aus demselben Material (wegen des thermischen Ausdehnungskoeffizienten z.B. Silikat, Keramik oder Invar) und besitzen jeweils eine Verbindungsfläche (32, 33), an welcher sie aneinandergeklebt werden. Vor der Verklebung wird in einem Körper (31) ein zur Verbindungsfläche (33) hin offener Hohlraum (34) (in der gewünschten Form, z.B. Rechteck- oder Rundzylinder) erzeugt, in welchen zwei Kanäle (35, 36) enden.

Auf den Boden dieses Hohlraums (34) wird ein Ausgleichselement (37) mit einem ersten Klebespalt (44) so eingeklebt, daß zwischen dem Ausgleichselement (37) und den seitlichen Wänden (39a, 39b) des Hohlraums (34) umlaufend ein Luftspalt (40, 41) übrigbleibt. Nachdem das Ausgleichselement (37) in den Hohlraum (34) eingeklebt ist, wird durch den Körper (31) und durch das Ausgleichselement (37) ein erster Kanal (35) gebohrt, welcher später in der Mitte des zweiten Klebespaltes (42) endet und durch welchen die Kleberzufuhr für die zweite Klebestelle am Ausgleichselement (37) erfolgen soll. Seitlich des Luftspaltes (40) ist eine weitere Ausnehmung angebracht, welche im zusammengefügten Zustand der beiden Körper (30, 31) einen zweiten Kanal (36) bildet.

Nachdem die beiden Körper (30, 31) aneinandergelegt sind, wird die benötigte Menge Kleber in den ersten Kanal (35) eingebracht und in dem ersten Kanal (35) oberhalb des eingebrachten Klebers ein Gasdruck erzeugt, welcher den Kleber in den zweiten Klebespalt (42) zwischen dem Ausgleichselement (37) und dem Körper (30) treibt. Nach Durchführung der zweiten Verklebung sollte sich kein Kleber mehr im ersten Kanal (35) befinden.

Damit die Kräftereduzierung wirklich erfolgt, muß das Ausgleichselement (37), welches die Aufnahme der Zugkräfte bewirken soll, ein wesentlich kleineres E-Modul wie die zu verbindenden Körper (30, 31) haben (möglichst kleiner 50 %, vorzugsweise um 10 %).

Durch entsprechende Auswahl des Klebers mit einer möglichst geringen Schrumpfung (kleiner 10 %, besser kleiner 3 % und noch besser kleiner 1 % bzw. kleiner 0,6 %) kann man die gewünschte Kräftereduzierung unterstützen.

Selbstverständlich könnte der Kleberzuführungskanal (35) auch durch den zweiten (30) der zu verbindenden Körper (30, 31) den zweiten Klebespalt (42) heranführen und der Entlüftungskanal (36) im Inneren des Körpers (31), weit weg von den Verbindungsflächen (32, 33) angeordnet sein.

In der Figur 9 ist nun eine Modifikation der in der Figur 8 dargestellten Klebestelle (43 in Figur 8) dargestellt. Dabei betrifft die Modifikation im wesentlichen nur die Form des Ausgleichselements (37 in Figur 9) und die Lage des Kleberzuführungskanals (35 in Figur 9).

Wie zur Figur 8 beschrieben, wird in dem einen der zu verbindenden Körper (46) ein Hohlraum (47) und eine Ausnehmung für einen Luftaustrittskanal (48) erzeugt, wobei die Dimensionierung des Hohlraums (47) einen umlaufenden Luftspalt (49) um das einzuklebende Ausgleichselement (50) zwischen diesem und der seitlichen Wand des Hohlraumes (47) sicherstellt. Das Ausgleichselement (50) wird mittels eines Klebers in dem Hohlraum (47) befestigt, wobei der Kleber den ganzen ersten Klebespalt (51) ausfüllt. Danach werden die beiden Körper (45, 46) an den beiden sich gegenüberliegenden Verbindungsflächen (53, 54) so aneinandergelegt, daß der in dem zweiten Körper (45) angebrachte Kleberzuführungskanal (55) möglichst exakt in der Mitte der Klebefläche oberhalb des Ausgleichselements (50) endet. Die Kleberzuführung erfolgt dann wieder wie zur Figur 8 bereits beschrieben, wobei der Kleber auch hier den Klebespalt (52) möglichst vollständig ausfüllen sollte.

Bei diesem Beispiel hat das Ausgleichselement (50), welches zur Aufnahme von Zugkräften und Biegekräften dient, eine umlaufende Querschnittsverringerung unterhalb der zur Klebung verwendeten Klebeplatten (50a, 50b) an den Enden des Längskörpers (50c). Diese Querschnittsverringerung erzeugt den in der Figur 8 beschriebenen Effekt auch dann, wenn der Elastizitätsmodul des Materials des Ausgleichselements (50) genauso oder sogar noch größer ist als der Elastizitätsmodul der zu verbindenden Körper (45, 46).

Aber selbst die mit der Verbindung gemäß Figur 8 oder 9 auftretenden Kräfte zwischen den beiden zu verbindenden Körper können noch zu groß sein. Will man eine Kraft auf die zu verbindenden Körper durch die Klebestelle von nahe Null erreichen, so muß man den Kleber seitlich zwischen den beiden zu verbindenden Körpern und dem Ausgleichselement anbringen. Wie dies realisiert werden kann, ist in der Figur 10 dargestellt.

In der Verbindungsfläche (62) des ersten zu verbindenden Körpers (60) befindet sich ein nach oben hin offener Hohlraum (64) mit dem gewünschten (vorzugsweise kreisrundem) Querschnitt, in dessen Boden ein Entgasungskanal (66) endet.

In diesen Hohlraum (64) wird vor dem Zusammenfügen der beiden zu verbindenden Körper (60, 61) ein längsgeschlitztes, innen hohles Verbindungsrohr (68) seitlich an einem zumindest fast vollständig umlaufenden Klebespalt (72) so angeklebt, daß zum Boden des Hohlraumes (64) noch ein Luftspalt (69) insbesondere kleberfrei bleibt und das Ausgleichselement (68) oberhalb des Bodens des Hohlraumes (64) endet.

In der Verbindungsfläche (63) des zweiten zu verbindenden Körpers (61) befindet sich ebenfalls ein nach oben hin offener Hohlraum (65) mit dem gewünschten (vorzugsweise kreisrunden) Querschnitt, in welchen seitlich, etwa in der Mitte der später zu erzeugenden Verklebung ein Kleberzuführungskanal (67) endet.

Dieser Hohlraum (65) hat an seinem der Verbindungsfläche (63) naheliegenden Ende eine umlaufende Nut (70) mit einem größeren Durchmesser als der Rest des Hohlraumes (65). Diese Nut (70) wird benötigt, um den durch Kapillarkräfte bedingten Kleberfluß zwischen dem Verbindungsrohr (68) und dem zweiten Körper (61) zu stoppen.

Der Durchmesser dieses Hohlraumes (65) ist geringfügig größer als der Hohlraum (64) in dem anderen zu verbindenden Körper (60), um eine nachträgliche Justierung der beiden zu verbindenden Körper (60, 61) zueinander zu ermöglichen.

Nachdem nun die beiden Körper (60, 61) an ihren Verbindungsflächen (62, 63) aneinander gefügt sind, wird die vorher bestimmte benötigte Menge Kleber in den Kleberkanal (67) gegeben und unter Gasdruck zum Kleberspalt (71) zwischen dem Verbindungsrohr (68) und dem zweiten Körper (61) befördert. Dabei sollte darauf geachtet werden, daß der Kleberkanal (67) in den Hohlraum (65) möglichst auf der gegenüberliegenden Seite des Schlitzes (73) in dem Verbindungsrohr (68) endet. Auch hier endet das Verbindungsrohr (68) oberhalb des Bodens des Hohlraumes (65) im zweiten (61) der zu verbindenden Körper (60, 61), so daß auch hier ein Luftspalt (74) zwischen dem Körper (61) und dem Verbindungsrohr (68) verbleibt. Diese beiden Luftspalte (69, 74) sind wichtig, damit sich vom Verbindungsrohr (68) keine Kräfte auf die Körper (60, 61) übertragen können. Diesem Ziel dient auch der Luftspalt (75) zwischen der Klebestelle (72) zwischen dem ersten Körper (60) und dem Verbindungsrohr (68) und der Klebestelle (71) zwischen dem zweiten Körper (61) und dem Verbindungsrohr (68).

Durch den Schlitz (73) im Verbindungsrohr (68) ist dieses in der Lage, die Deformationen durch die seitlich des Verbindungsrohres (68) angreifende Kleberschrumpfung aufzunehmen, ohne daß dadurch Kräfte auf die Verbindungsflächen (62, 63) zwischen den beiden zu verbindenden Körpern (60, 61) geleitet werden.

Bei all den in den Figuren dargestellten Skizzen ist zu berücksichtigen, daß dort nicht die richtigen Größenverhältnisse dargestellt sind. Insbesondere alle Klebespalte sind sehr viel kleiner als dargestellt, da der Kleber durch die Kapillarkraft in diese Klebespalte hineinfließen soll und ein Klebespalt somit eine Breite von wenigen Zehntel Millimetern nicht überschreiten darf.

Der Kleberzuführungskanal sollte nach der Durchführung der Verklebung vorzugsweise möglichst kleberfrei sein.

Die Klebestellen in den Ansprengflächen zwischen den beiden zu verbindenden Körpern dienen der Verbindung der beiden zu verbindenden Körper miteinander, insbesondere bei starken Beschleunigungen bzw. deren Änderung sicher. Ihre Haltekraft muß also insbesondere erst dann voll wirksam werden, wenn sich die zu verbindenden Körper an ihren Verbindungsflächen voneinander lösen wollen. Dies kann je nach der Geometrie des verbundenen Körpers und zur Lage der Verbindungsflächen relativ zu der bzw. den Beschleunigungsrichtungen unterschiedlich schnell erfolgen. Die Verbindungsflächen können zusätzlich noch durch eine Ansprengung miteinander verbunden sein.

Der Hohlraum zur Aufnahme des Ausgleichselements muß bei den Figuren 8 und 9 nicht in nur einem der beiden Körper ausgebildet sein. Genausogut kann aufgeteilt werden und aus zwei sich möglichst genau gegenüberliegenden Hohlräumen gebildet werden. Diese Modifikation hat aber den Nachteil, daß eine genauere Justierung der beiden zu verbindenden Körper zueinander bei der Verklebung erfolgen muß. In Sonderfällen könnte aber auch diese Lösung vorteilhaft sein.

Zur Positionsvermessung des verbundenen Körpers können Teile seiner Oberfläche verspiegelt sein.

Weitere Möglichkeiten zur Feinabstimmung des Schwingungsverhaltens des verbundenen Körpers ergeben sich durch die Möglichkeit der Anbringung von zusätzlichen Gewichtskörpern an der Struktur des Tragekörpers (insbesondere an den Streben) sowie der Entfernung von Material aus der Struktur des Tragekörpers senkrecht zur Deckplatte.

Der Tragekörper und die Deckplatte sind vorzugsweise (aus Gründen der thermischen Stabilität) aus demselben Material, wobei jeder der beiden Körper über mindestens eine Verbindungsfläche verfügt, welche sich gegenüberliegen. Auf mindestens einer der beiden Verbindungsflächen ist eine oder mehrere Ausnehmungen für eine Klebestelle bzw. Klebespalt angebracht, wobei ein Kleber für eine Klebeverbindung der beiden Verbindungsflächen an der oder den Klebestellen zwischen den beiden Körpern sorgt.

Außerhalb der Klebestellen können beide Körper aneinandergesprengt sein. Die Klebestellen müssen dabei nicht vollständig in der Ansprengfläche liegen. Bei einer Ansprengung der beiden Körper aneinander kann eine Ansprengfläche von einem zusätzlichen Klebekanal abgeschlossen sein, welcher auf den beiden Körpern vorzugsweise um die Kante der Ansprengflächen oder in einer Nut zwischen den beiden Körpern an den Ansprengflächen angeordnet ist. Außerdem sollten die Ansprengflächen die Klebestelle möglichst vollständig umschließen, zumindest jedoch mehr als 50 %, vorzugsweise mehr als 60 % und weiterhin vorzugsweise mehr als 65 %.

Ein erster Kanal kann zur Einbringung des Klebers in der Klebestelle vorgesehen werde und sollte vorzugsweise kreisförmig sein.

Ein zweiter Kanal kann für eine Luftverbindung bis zur anzuklebenden Klebestelle sorgen und so zum Entlüften der Klebestelle dienen und ist vorzugsweise rechteckförmig. Der zweite Kanal ist sinnvollerweise bis zum Freischnitt um den Klebebereich geführt, wobei der zweite Kanal und der Freischnitt vorzugsweise mindestens die dreifache, vorzugsweise die fünffache Dicke des inneren Klebebereiches hat und der zweite Kanal und der Freischnitt dieselbe Dicke haben.

Die auf dem Tragekörper an diskreten Stellen angeordneten punktförmigen Klebestelle(n) sollten in Höhe des Schubmittelpunktes der beiden Körper plaziert werden und sie weisen vorzugsweise einen inneren flachen kreiszylinderförmigen Klebebereich auf und um diesen inneren Klebebereich sollte ein sie umschließender äußerer kreiszylinderringförmigen Freischnitt angeordnet sein, um den Austritt des Klebers aus der Klebestelle zu verhindern.

Der erfindungsgemäße Positioniertisch besteht im wesentlichen aus einem Tragekörper und einer Deckplatte. Dabei kann der Tragekörper aus verschiedenen Tragekörpern zusammengesetzt sein oder aus einem Teil herausgearbeitet werden (homogener Körper).

Der Tragekörper kann die unterschiedlichste, nach Anwendungsfall optimierte Ausgestaltung besitzen (z.B. aus geschlossenen oder offenen Vieleckkörpern (mit Dreiecks-, Vierecks-, Fünfecks-, Sechsecks- usw. n-ecks-Flächen), eine Ausgestaltung wie das "Atomium" besitzen (Knotenpunkte (z.B. Kugeln, Würfel, usw.) mit Verbindungsstegen (rund oder vieleckig), usw.).

Der Positioniertisch kann seitlich und unten offen oder geschlossen sein und die Deckplatte kann an irgendeiner Seite des Tragekörpers befestigt sein (also nicht zwangsweise oben).

Das Material des Tragekörpers kann aus einem einzigen Material bestehen oder es können unterschiedliche Materialien zum Aufbau des Tragekörpers verwendet werden. Um den Tragekörper leichter zu machen, besitzt dieser eine Vielzahl von Ausnehmungen (Leichtbaustruktur).

An dem Tragekörper des Positioniertisches ist eine separat hergestellte Deckplatte befestigt, welche entweder aus mehreren Teilen zusammengesetzt ist oder aus einem homogenen Teil besteht. Das Material der Deckplatte kann dabei aus einem einzigen Material bestehen oder es können unterschiedliche Materialien zur Herstellung verwendet werden.

Um eine möglichst geringe Dimensionsveränderung des Positioniertisches bei Temperaturänderungen zu erhalten, sollte der thermische Ausdehnungskoeffizient der Materialien des Tragekörpers und der Deckplatte möglichst klein sein und sich maximal um $2*10^{-6}$ mm/K unterscheiden. Diese Differenz des thermische Ausdehnungskoeffizient der Materialien von Tragekörper und Deckplatte tendiert gegen null, wenn man beide aus demselben Material fertigt. Als Materialien für den Tragekörpers und die Deckplatte sind insbesondere Invar, Glas oder Keramik, insbesondere Glaskeramik geeignet.

Zwischen Tragekörper und Deckplatte können mehrere Befestigungsstellen angeordnet sein, welche räumlich voneinander getrennt sind. Durch erleichtert man die Einstellung des Schwingungsverhaltens des Positioniertisches, wodurch dieser für unterschiedlichste Geräte eingesetzt werden kann. Außerdem erlaubt man so dem Elektroniker die Entwicklung der Positionierelektronik unabhängig von dem Positioniertisch bzw. erlaubt es ihm, kritische Resonanzstellen zu vermeiden.

Die maximale Ausdehnung an zumindest 50 % der Befestigungsstellen sollte kleiner als 12 mm sein, um zumindest näherungsweise eine punktförmige Befestigung der Deckplatte auf dem Tragekörper zu erhalten. Insbesondere diese punktförmige Befestigung erlaubt aber eine optimale Anpassung des Schwingungsverhaltens des Positioniertisches an das Einsatzspektrum und erlaubt Fertigungsschwankungen bei der Einzelteilproduktion durch geschickte Positionierung der Befestigungspunkte zueinander aufzufangen.

Die Befestigung der Deckplatte an dem Tragekörper kann durch Ansprengung in Kombination mit einer der Befestigungstechniken Klebung, Lötung oder Schweißung, erfolgen, je nach den verwendeten Materialien und dem erforderlichen Anforderungsprofil. Erfindungsgemäß kommt für Glaskeramik die Klebetechnik in Kombination mit Ansprengung in Frage. Bei der Verwendung von z.B. Invar als Material des Positioniertisches bietet sich insbesondere eine Klebung, Lötung, Schweißung oder eine Kombination dieser Befestigungstechniken an.

Die Dicke der Deckplatte sollte so bemessen werden, daß sie die Spannungen des Tragekörpers aufnehmen kann. Ihre Dicke sollte dabei aber so klein wie möglich sein, um den Positioniertisch möglichst leicht zu machen (und damit die Verstelldynamik möglichst groß). Dies wird insbesondere bei größeren Positioniertischen dann erreicht, wenn die Dicke der Deckplatte kleiner als 2 mm und größer als 0,5 mm ist.

Eine hervorragende Leichtbaustruktur für den Tragekörper erhält man, wenn dieser aus zwei oder dreidimensional angeordneten Knoten und Speichen aufgebaut ist, wobei der Querschnitt der Speichen kleiner ist als der Querschnitt der Knoten. Durch entsprechende Berechnungsmethoden kann man dann sehr genau die gewünschten Parameter an einem Rechner simulieren, da hierfür fertige Programme käuflich sind.

Der Tragekörper sollte unterhalb der Deckplatte Ausnehmungen zur Aufnahme von Verstellelementen aufweist, damit die Gesamtdimensionen des Tisches klein gehalten werden können.

Wenn man in der Mitte des Tragekörpers eine Öffnung anordnet, erleichtert dies den Einsatz man Manipulatoren und in optischen Geräten, bei welchem eine Durchlichtbetrachtung erfolgt.

Zwischen Tragekörper und Deckplatte kann man Klebestellen anordnen, da diese eine sehr geringe Deformation an den zu verbindenden Körpern bei der Montage hervorrufen und thermisch sehr stabil ausgeführt werden können (geringe Deformationen bei Temperaturänderungen). Um der idealen punktförmigen Verbindung möglichst nahe zu kommen sollten diese Klebestellen eine runde Form aufweisen.

Der Positioniertisch kann insbesondere in optischen Geräten eingebaut werden, welche bei einer Wellenlänge kleiner als 400 nm arbeite. Da die Formstabilität des Positioniertisches bei professioneller Ausführung im Nanometerbereich (d.h. kleiner 100 nm bis hin zu 10nm) liegt, können mit ihm insbesondere Bauteile mit sehr kleinen Strukturen in einem optischen Gerät sehr exakt gelagert werden.

In derartigen optischen Instrument sind eine oder mehrere Linsen und/oder eine oder mehrere spiegelnde Elemente angeordnet. Als Beispiel für ein derartiges optisches Gerät sei ein Mikroskop genannt, welches vorzugsweise mit elektromagnetischen Wellen aus dem UV-Bereich arbeitet.

**Patentansprüche**

1. Positioniertisch mit zumindest einem Tragekörper, der eine Vielzahl von Ausnehmungen besitzt und mit mindestens einer Deckplatte, **dadurch gekennzeichnet, dass** das Material des Tragekörpers und der Deckplatte Glas oder Keramik, insbesondere Glaskeramik, ist und dass die Deckplatte an dem Tragekörper durch Ansprengung in Kombination mit einer der Befestigungstechniken Klebung, Lötung oder Schweißung befestigt ist.

2. Positioniertisch nach Anspruch 1, **dadurch gekennzeichnet, dass** der thermische Ausdehnungskoeffizient der Materialien des Tragekörpers und der Deckplatte maximal um 2*10-6 mm/K unterschiedlich ist.

3. Positioniertisch nach Anspruch 1 oder 2, **dadurch gekennzeichnet, dass** zwischen Tragekörper und Deckplatte mehrere Befestigungsstellen angeordnet sind, welche räumlich voneinander getrennt sind.

4. Positioniertisch nach Anspruch 3, **dadurch gekennzeichnet, dass** die maximale Ausdehnung an zumindest 50 % der Befestigungsstellen kleiner als 12 mm ist.

5. Positioniertisch nach einem der Ansprüche 1 bis 4, **dadurch gekennzeichnet, dass** die Dicke der Deckplatte maximal 2 mm ist.

6. Positioniertisch nach einem der Ansprüche 1 bis 5, **dadurch gekennzeichnet, dass** der Tragekörper aus zwei- oder dreidimensional angeordneten Knoten und Speichen aufgebaut ist, wobei der Querschnitt der Speichen kleiner ist als der Querschnitt der Knoten.

7. Positioniertisch nach einem der Ansprüche 1 bis 6, **dadurch gekennzeichnet, dass** der Tragekörper unterhalb der Deckplatte Ausnehmungen zur Aufnahme von Verstellelementen aufweist.

8. Positioniertisch nach einem der Ansprüche 1 bis 7, **dadurch gekennzeichnet, dass** in der Mitte des Tragekörpers eine Öffnung angeordnet ist.

9. Positioniertisch nach einem der Ansprüche 1 bis 8, **dadurch gekennzeichnet, dass** zwischen Tragekörper und Deckplatte Klebestellen angeordnet sind und dass diese Klebestellen rund sind.

10. Positioniertisch nach einem der Ansprüche 1 bis 9, **dadurch gekennzeichnet, dass** der Tragekörper und die Deckplatte aus demselben Material sind.

11. Optisches Gerät mit einem Positioniertisch nach einem der Ansprüche 1 bis 10, **dadurch gekennzeichnet, dass** das optische Gerät bei einer Wellenlänge kleiner als 400 nm arbeitet.

12. Optisches Gerät nach Anspruch 11, **dadurch gekennzeichnet, dass** in dem optischen Gerät mindestens eine Linse angeordnet ist.

13. Optisches Gerät nach Anspruch 11, **dadurch ge-**

**kennzeichnet, dass** in dem optischen Gerät mindestens ein spiegelndes Element angeordnet ist.

14. Optisches Gerät nach einem der Ansprüche 11, 12 oder 13, **dadurch gekennzeichnet, dass** das optische Gerät ein Mikroskop ist.

## Claims

1. Positioning stage having at least one body, which has a multiplicity of recesses, and having at least one cover plate, **characterized in that** the material of the support body and of the cover plate is glass or ceramic, in particular glass-ceramic, and **in that** the cover plate is fastened on the support body by a force-fit in combination with one of the fastening techniques: adhesive bonding, soldering or welding.

2. Positioning stage according to Claim 1, **characterized in that** the thermal expansion coefficients of the materials of the support body and of the cover plate differ by at most $2*10^{-6}$ mm/K.

3. Positioning stage according to Claim 1 or 2, **characterized in that** a plurality of fastening points, which are spatially separated from one another, are arranged between the support body and the cover plate.

4. Positioning stage according to Claim 3, **characterized in that** the maximum dimension at least at 50% of the fastening points is less than 12 mm.

5. Positioning stage according to one of Claims 1 to 4, **characterized in that** the thickness of the cover plate is at most 2 mm.

6. Positioning stage according to one of Claims 1 to 5, **characterized in that** the support body is made up of two- or three-dimensionally arranged nodes and branches, the cross section of the branches being less than the cross section of the nodes.

7. Positioning stage according to one of Claims 1 to 6, **characterized in that** the support body has recesses below the cover plate in order to hold adjusting elements.

8. Positioning stage according to one of Claims 1 to 7, **characterized in that** an opening is arranged in the middle of the support body.

9. Positioning stage according to one of Claims 1 to 8, **characterized in that** adhesive points are arranged between the support body and the cover plate, and **in that** these adhesive points are round.

10. Positioning stage according to one of Claims 1 to 9, **characterized in that** the support body and the cover plate are made of the same material.

11. Optical device having a positioning stage according to one of Claims 1 to 10, **characterized in that** the optical device operates at a wavelength of less than 400 nm.

12. Optical device according to Claim 11, **characterized in that** at least one lens is arranged in the optical device.

13. Optical device according to Claim 11, **characterized in that** at least one reflective element is arranged in the optical device.

14. Optical device according to one of Claims 11, 12 and 13, **characterized in that** the optical device is a microscope.

## Revendications

1. Table de positionnement avec au moins un support possédant une multiplicité d'évidements et avec au moins une plaque de recouvrement, **caractérisée en ce que** le matériau du support et de la plaque de recouvrement est du verre ou de la céramique, en particulier de la céramique de verre et que la plaque de recouvrement est fixée sur le support par plaquage en combinaison avec une des techniques de fixation par collage, par brasure ou par soudure.

2. Table de positionnement selon la revendication 1, **caractérisée en ce que** les coefficients de dilatation thermique des matériaux du support et de la plaque de recouvrement sont différents au maximum de 2*10-6 mm/K.

3. Table de positionnement selon la revendication 1 ou 2, **caractérisée en ce que** plusieurs points de fixation séparés dans l'espace sont disposés entre le support et la plaque de recouvrement.

4. Table de positionnement selon la revendication 3, **caractérisée en ce que** la dilation maximale est inférieure à 12 mm à au moins 50% des points de fixation.

5. Table de positionnement selon une des revendications 1 à 4, **caractérisée en ce que** la plaque de recouvrement a une épaisseur maximum de 2 mm.

6. Table de positionnement selon une des revendications 1 à 5, **caractérisée en ce que** le support est constitué de noeuds et de branches disposés en deux ou trois dimensions, la section transversale des branches étant plus petite que la section transversale des noeuds.

7. Table de positionnement selon une des revendications 1 à 6, **caractérisée en ce qu'**au-dessous de la plaque de recouvrement, le support présente des évidements pour recevoir des éléments de réglage.

8. Table de positionnement selon une des revendications 1 à 7, **caractérisée en ce qu'**une ouverture est disposée au centre du support.

9. Table de positionnement selon une des revendications 1 à 8, **caractérisée en ce que** des points de collage sont disposés entre le support et la plaque de recouvrement et que ces points de collage sont ronds.

10. Table de positionnement selon une des revendications 1 à 9, **caractérisée en ce que** le support et la plaque de recouvrement sont du même matériau.

11. Appareil optique avec une table de positionnement selon une des revendications 1 à 10, **caractérisé en ce que** l'appareil optique fonctionne à une longueur d'onde inférieure à 400 nm.

12. Appareil optique selon la revendication 11, **caractérisé en ce qu'**au moins une lentille est disposée dans l'appareil optique.

13. Appareil optique selon la revendication 11, **caractérisé en ce qu'**au moins un élément réfléchissant est disposé dans l'appareil optique.

14. Appareil optique selon une des revendications 11, 12 ou 13, **caractérisé en ce que** l'appareil optique est un microscope.

## FIG.1

## FIG.2

# FIG.3

## FIG. 4

## FIG. 5

FIG. 6

FIG. 7

FIG.10

FIG.9

FIG.8